# EUROPÄISCHE PATENTANMELDUNG

(11) **EP 0 801 300 A2**
(43) Veröffentlichungstag der Anmeldung: **15.10.1997**
(21) Anmeldenummer: 97105490.3
(22) Anmeldetag: 02.04.1997
(51) Int. Cl.: G01N 21/47

(54) **Vorrichtung zur Bestimmung der Oberflächenfeuchtigkeit**

(30) Priorität: 11.04.1996 DE 19614265
(71) Anmelder: HOECHST AKTIENGESELLSCHAFT, 65929 Frankfurt am Main (DE)
(72) Erfinder: Lask, Helmut Dl., 65343 Eltville (DE)

(57) **Zusammenfassung**

Vorrichtung zur Bestimmung der Oberflächenfeuchtigkeit mittels Streuung eines Lichtstrahls an der Basis eines Reversionsprismas, das auf dem Prüfkörper aufliegt, dadurch gekennzeichnet, daß monochromatisches, gepulstes oder monochromatisch-gepulstes Licht für die Messung verwendet wird.

## Beschreibung

Die Erfindung betrifft eine Vorrichtung, die geeignet ist, die Oberflächenfeuchtigkeit, insbesondere von saugfähigen, flüssigkeitsabsorbierenden bzw. flüssigkeitsweiterleitenden flächenförmigen Gebilden wie etwa Filterpapier, Babywindeln, Damenbinden, Inkontinenzwindeln, Krankenunterlagen, Vliesstoffen, Textilien zu bestimmen. Bei Materialien mit homogener Feuchtigkeitsverteilung kann außerdem über die Bestimmung der Oberflächenfeuchte eine Aussage über die Feuchtigkeit im Inneren des Materials getroffen werden.

EP-A-0 312 919 offenbart ein Verfahren zur Messung der Oberfiächenfeuchtigkeit, dessen Prinzip in der Totalreflexion eines kontinuierlichen Lichtstrahls an der Basisfläche eines Dove-Prismas besteht. Die neben der Totalreflexion auftretende Streuung des Lichts an der Basisfläche verändert ihre Intensität, wenn die Basisfläche mit einer feuchten Oberfläche in Kontakt gebracht wird.

Überraschenderweise wurde gefunden, daß die bei den Messungen nach der Methode des Standes der Technik auftretenden, störenden Fremdlichteinflüsse dadurch minimiert werden können, daß man monochromatisches Licht verwendet, und/oder daß man die Lichtquelle und den Detektor, oder einen gegebenenfalls dem Detektor nachgeschalteten Verstärker, elektronisch, mechanisch oder elektrooptisch mit einer vorgegebenen Frequenz pulst.

Gegenstand der Erfindung ist eine Vorrichtung zur Bestimmung der Oberflächenfeuchtigkeit von saugfähigen oder flüssigkeitsabsorbierenden flächenförmigen Gebilden und Materialien, bestehend im wesentlichen aus einem Reversionsprisma nach Dove (1), einer Lichtquelle (2), die so angeordnet ist, daß ihre parallel gerichteten Lichtstrahlen (2a) senkrecht auf eine der Kathetenflächen (3) des Prismas (1) auftreffen und von der Hypothenusenfläche des Prismas (1), die mit der in bezug auf Feuchtigkeit zu messenden Oberfläche (9) in Kontakt gebracht wird, reflektiert werden, einer Lichtfalle (4), die so angeordnet ist, daß die von der Hypothenusenfläche reflektierten Strahlen (2c) auf sie auftreffen, und einem lichtelektrischen Wandler (10), der sich in dem von den beiden Kathetenflächen (3) und (5) gebildeten rechten Winkel befindet und so angeordnet ist, daß seine Meßfläche der Hypothenusenfläche des Prismas parallel gegenüber liegt und der das von der in bezug auf Feuchtigkeit zu messenden Oberfläche (9) gestreute Licht (2b) in ein Meßsignal umwandelt, dadurch gekennzeichnet, daß
a) das für die Messung verwendete Licht eine bekannte, feststehende Wellenlänge aufweist und daß sich
a₁) vor dem lichtelektrischen Wandler (10) ein Filter befindet, das nur diese Wellenlänge durchläßt, oder daß
a₂) der lichtelektrische Wandler (10) nur für diese Wellenlänge empfindlich ist, oder daß
b₁) das für die Messung verwendete Licht ab seiner Erzeugung mit einer bekannten, feststehenden Frequenz gepulst ist oder von einer geeigneten Vorrichtung, die sich im Lichtstrahl (2a) vor Eintritt in das Prisma (1) befindet, gepulst wird und daß
b₂) der lichtelektrische Wandler (10) mit selektiver Empfindlichkeit für die bekannte, feststehende Frequenz betrieben wird oder daß sein Ausgangssignal mit selektiver Empfindlichkeit für diese Frequenz verstärkt wird, oder daß
c) in Kombination beider Methoden Licht einer bekannten, feststehenden Wellenlänge und einer bekannten, feststehenden Frequenz zur Anwendung kommt.

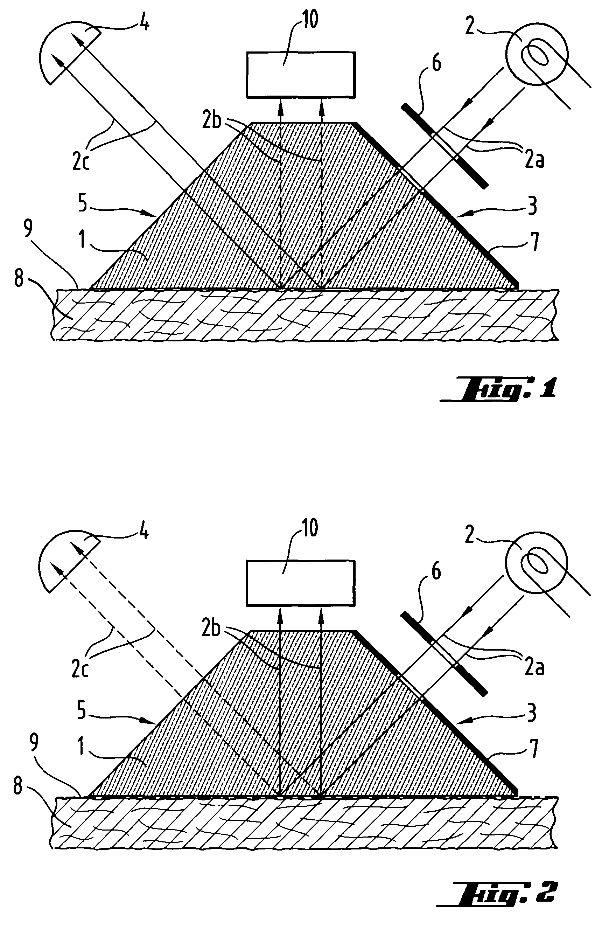

Eine bevorzugte Ausführungsform dieser Erfindung ist in Figur 1 dargestellt. Bei einem rechtwinkligen Prisma (1) ist oberhalb der einen Kathetenfläche (3) eine Lichtquelle (2) angebracht. Die aus dieser Lichtquelle herrührenden parallelen Lichtstrahlen (2a) durchlaufen das Prisma und treffen an der Hypothenusenfläche auf die Grenzfläche Glas/Luft. Zur Parallelrichtung der Lichtstrahlen können in den Strahlengang Blenden (6) eingesetzt werden und die Kathetenfläche kann an den Stellen, an denen kein Licht einfallen soll, mit einer lichtundurchlässigen Schicht (7) abgedeckt werden. Liegt nun die Hypothenusenfläche dieses Prismas auf einer trockenen Oberfläche auf, so erfolgt aufgrund des geringen Kontakts zwischen Glas und Oberfläche des zu messenden Objekts Totalreflektion des einfallenden Lichtes und der überwiegende Teil (2c) verläßt das Prisma durch die zweite Kathetenfläche (5) und wird von der Lichtfalle (4) absorbiert. Entsprechend dem geringen Kontakt zwischen der Oberfläche (9) und der Hypothenusenfläche wird ein geringer Anteil Streulicht (2b) erzeugt, das den lichtelektrischen Wandler (10) erreicht. Die Lichtfalle hat die Form eines schwarzen Hohlraums. Bei einer praxisgerechten Ausführung dieser Vorrichtung kann als solche Lichtfalle ein Gehäuse der Vorrichtung dienen, wenn dieses angerauht und geschwärzt ist.

Liegt die Hypothenusenfläche des Prismas auf einer feuchten Oberfläche auf, wie in Figur 2 dargestellt, verläßt der Lichtstrahl das Prisma an der Hypothenusenfläche und wird an der unregelmäßigen Oberfläche (9) des Prüfkörpers (8) gestreut. Der überwiegende Teil des gestreuten Lichtes (2b) gelangt wieder in das Glasprisma und trifft auf einen lichtelektrischen Wandler (10), der sich in dem von den Kathetenflächen gebildeten Winkel genau gegenüber der Hypothenusenfläche befindet. Das in diesem lichtelektrischen Wandler (10) erzeugte relevante Nutzsignal ist proportional der Feuchtigkeit an der Oberfläche des Prüfkörpers und wird mit entsprechenden Meßgeräten angezeigt. Mit Hilfe eines Schreibers lassen sich die Meßvorgänge in zeitlicher Abhängigkeit vorteilhaft aufzeichen.

Für eine einwandfreie Messung muß die Hypothenusenfläche des Prismas in unmittelbarem Kontakt mit der zu prüfenden Oberfläche bleiben. Dies wird bereits durch das Eigengewicht des auf der zu prüfenden Oberfläche aufliegenden Prismas erreicht. Durch Auflegen von zusätzlichen Gewichten kann dieser Kontakt zu der zu messenden Oberfläche, insbesondere bei weichen, elastischen Objekten, wie etwa Windeln, verstärkt werden. Umgekehrt ist es auch möglich, das Auflagegewicht möglichst gering zu halten, indem das Prisma so umgedreht wird, daß die Hypothenusenfläche nach oben zu liegen kommt und das zu messende Objekt dann auf die Hypothenusenfläche aufgelegt wird.

Die Erzeugung gepulster Lichtstrahlung kann auf mechanischem Weg dadurch erfolgen, daß das Licht einer kontinuierlich arbeitenden Lichtquelle durch einen mechanischen Unterbrecher (Chopper) periodisch mit bekannter Frequenz unterbrochen wird. Auf elektronischem Weg kann die Erzeugung solchen Lichts durch die Modulation der von der Lichtquelle emittierten Lichtintensität mit einer von außen vorgegebenen Frequenz erfolgen. Ebenfalls ist es möglich, den Lichtstrahl einer kontinuierlichen Quelle mit einem elektrooptischen Bauelement periodisch zu unterbrechen, beispielsweise mit einer Pockelszelle.

Durch die erfindungsgemäße Verwendung monochromatischen Lichts, gepulster Lichtquellen, Spektralfilter und frequenzselektiver lichtelektrischer Wandler (10) und/oder Verstärker ist die Vorrichtung gegenüber dem Einfall von Fremdlicht unempfindlich.

Als Lichtquellen werden bevorzugt Laser, beispielsweise Helium-Neon-Laser, oder Laserdioden verwendet. Die Wellenlänge kann im sichtbaren oder infraroten Spektralbereich liegen.

Die erfindungsgemäße Vorrichtung ist besonders geeignet, Hygieneartikel, wie zum Beispiel Babywindeln, Inkontinenzwindeln, Damenbinden, Krankenhausunterlagen, Vliesstoffe und textile Gewebe zu untersuchen.

Überraschenderweise wurde gefunden, daß sich dieses Meßsystem auch auf technische Anwendungen ausweiten läßt. So lassen sich beispielsweise auch technische flächenförmig saugfähige Materialien untersuchen, bei denen die Oberflächenfeuchte nicht nur durch wäßrige Flüssigkeiten, sondern auch durch organische Flüssigkeiten, wie z.B. Isopropanol, Ethanol oder Öle, wie beispielsweise Paraffinöl, Silikonöl und Mineralöl hervorgerufen wird.

### Beispiel 1

Es wurde die Oberflächenfeuchte von Windeln mit und ohne Fremdlichteinfall gemessen. Als Lichtquelle diente eine Laserdiode vom Typ LD 242, die Licht der Wellenlänge 880 nm mit einer Leistung von 8 mW/sr emittiert. Die Strahlung der Lichtquelle wurde mit einer aus einem Triggergenerator entnommenen Frequenz moduliert. Als lichtelektrischer Wandler diente eine Diode vom Typ BPW 43. Ihr Ausgangssignal wurde mittels eines frequenzselektiven Verstärkers, in den die Frequenz des Triggergenerators als Referenz eingegeben wurde, verstärkt. Tabelle 1 zeigt die Meßergebnisse, die ohne Fremdlichteinfall erhalten wurden, sowie die Ergebnisse, die bei seitlicher Bestrahlung des Meßgerätes und der Winde mit einer Leuchtstoffröhre von 11 W Leistung erhalten wurden.

**Tabelle 1**

| Oberflächenfeuchte (%) | |
|---|---|
| ohne Fremdlicht | mit Fremdlicht |
| 68 | 69 |
| 35 | 35 |
| 24 | 24 |
| 10 | 10 |

### Vergleichsbeispiel

Es wurde die gleiche Meßanordnung wie in Beispiel 1 gewählt, aber die Lichtquelle und der Detektionsverstärker wurden nicht gepulst betrieben. Die an den gleichen Meßobjekten erhaltenen Meßwerte zeigt Tabelle 2.

**Tabelle 2**

| Oberflächenfeuchte (%) | |
|---|---|
| ohne Fremdlicht | mit Fremdlicht |
| 70 | 85 |
| 38 | 50 |
| 25 | 35 |
| 10 | 13 |

Die folgenden Beispiele 2 und 3 beschreiben andere Methoden der Lichterzeugung.

### Beispiel 2

Als Lichtquelle diente eine Halogenlampe 12V/5W. Das ausgesendete Licht wurde mechanisch mit einer Schlitzscheibe auf 9600 Hz gechoppert. Die Meßsignale wurden mit einer Silizium-Photozelle BPY 47P empfangen und anschließend meßtechnisch in einem PC aufgearbeitet.

### Beispiel 3

Als Lichtquelle diente ein Helium-Neon-Laser der Wellenlänge 632,8 nm. Das ausgesendete Licht wurde mechanisch mit einer Schlitzscheibe auf 9600 Hz gechoppert. Die Meßsignale wurden mit einer Photodiode BPW 21, die einen Meßbereich von 350 - 820 nm bei einem Empfindlichkeitsmaximum von 550 nm hat, empfangen, und anschließend in einem PC meßtechnisch aufgearbeitet.

## Patentansprüche

1. Vorrichtung zur Bestimmung der Oberflächenfeuchtigkeit von saugfähigen oder flüssigkeitsabsorbierenden, flächenförmigen Gebilden und Materialien, bestehend im wesentlichen aus einem Reversionsprisma nach Dove (1), einer Lichtquelle (2), die so angeordnet ist, daß ihre parallel gerichteten Lichtstrahlen (2a) senkrecht auf eine der Kathetenflächen (3) des Prismas (1) auftreffen und von der Hypothenusenfläche des Prismas (1), die mit der in bezug auf Feuchtigkeit zu messenden Oberfläche (9) in Kontakt gebracht wird, reflektiert werden, einer Lichtfalle (4), die so angeordnet ist, daß die von der Hypothenusenfläche reflektierten Strahlen (2c) auf sie auftreffen, und einem lichtelektrischen Wandler (10), der sich in dem von den beiden Kathetenflächen (3) und (5) gebildeten rechten Winkel befindet und so angeordnet ist, daß seine Meßfläche der Hypothenusenfläche des Prismas parallel gegenüber liegt und der das von der in bezug auf Feuchtigkeit zu messenden Oberfläche (9) gestreute Licht (2b) in ein Meßsignal umwandelt, dadurch gekennzeichnet, daß
a) das für die Messung verwendete Licht eine bekannte, feststehende Wellenlänge aufweist und daß sich
a₁) vor dem lichtelektrischen Wandler (10) ein Filter befindet, das nur diese Wellenlänge durchläßt, oder daß
a₂) der lichtelektrische Wandler (10) nur für diese Wellenlänge empfindlich ist, oder daß
b₁) das für die Messung verwendete Licht ab seiner Erzeugung mit einer bekannten, feststehenden Frequenz gepulst ist oder von einer geeigneten Vorrichtung, die sich im Lichtstrahl (2a) vor Eintritt in das Prisma (1) befindet, gepulst wird und daß
b₂) der lichtelektrische Wandler (10) mit selektiver Empfindlichkeit für die bekannte, feststehende Frequenz betrieben wird oder daß sein Ausgangssignal mit selektiver Empfindlichkeit für diese Frequenz verstärkt wird, oder daß
c) in Kombination beider Methoden Licht einer bekannten,feststehenden Wellenlänge und einer bekannten, feststehenden Frequenz zur Anwendung kommt.

2. Vorrichtung gemäß Anspruch 1, dadurch gekennzeichnet, daß die Lichtquelle ein Laser ist.

3. Vorrichtung gemäß Anspruch 1, dadurch gekennzeichnet, daß die Lichtquelle eine Laserdiode ist.

4. Vorrichtung gemäß Anspruch 1, dadurch gekennzeichnet, daß die zur periodischen Unterbrechung des Lichtstrahls geeignete Vorrichtung ein mechanischer Unterbrecher ist.

5. Vorrichtung gemäß Anspruch 1, dadurch gekennzeichnet, daß die zur periodischen Unterbrechung des Lichtstrahls geeignete Vorrichtung ein elektrooptisches Bauelement ist.

6. Verwendung der in Anspruch 1 beanspruchten Vorrichtung zur Bestimmung der Oberflächenfeuchtigkeit von saugfähigen oder flüssigkeitsabsorbierenden flächenförmigen Gebilden und Materialien.

7. Verwendung der in Anspruch 1 beanspruchten Vorrichtung zur Bestimmung der Oberflächenfeuchtigkeit von Hygieneartikeln oder technischen Materialien.

8. Verwendung der in Anspruch 1 beanspruchten Vorrichtung zur Bestimmung der Oberflächenfeuchtigkeit von Saug- und Filtermaterialien, Babywindeln, Inkontinenzwindeln, Damenbinden, Krankenhausunterlagen sowie Textilien.

9. Verwendung der in Anspruch 1 beanspruchten Vorrichtung zur Bestimmung von Oberflächenfeuchtigkeiten, die durch Wasser, wäßrige Lösungen und flüssige organische Verbindungen hervorgerufen werden.

10. Verwendung der in Anspruch 1 beanspruchten Vorrichtung zur Bestimmung von Oberflächenfeuchtigkeiten, die durch Isopropanol, Ethanol oder Öle wie Paraffinöl, Silikonöl oder Mineralöl hervorgerufen werden.
